# EUROPEAN PATENT APPLICATION

(11) **EP 4 675 525 A1**
(43) Date of publication of application: **07.01.2026**
(21) Application number: 25186582.0
(22) Date of filing: 01.07.2025
(51) Int. Cl.: G06Q 10/063, G06Q 10/083, G06Q 10/087, H04W 4/029, H04W 4/80

(54) **SYSTEM FOR MONITORING OPERATING PARAMETERS AND LOCATION OF BEVERAGE BARRELS**

(30) Priority: 01.07.2024 CZ 20240268
(71) Applicant: Sanixera s.r.o., 10800 Praha 10, Malesice (CZ)
(72) Inventor: SIBRAVA, David, 16900 Praha 6, Brevnov (CZ); PURS, Jiri, 16000 Praha 6, Bubenec (CZ)
(74) Representative: Kratochvil, Vaclav

(57) **Abstract**

A system for monitoring the location and operating variables of beverage barrels, comprising at least one location chip (5) located on the barrel. The location chip (5) is connected via the mobile gateway (2) and/or the static gateway (3) to a parent system (1) - backend to which the control system (4) - frontend is connected, and further includes at least one active beacon (18) and/or passive beacon (19) of the keg coupler (6) connected to the location chip (5), the location chip (5) comprising a main processor (15) connected to a temperature sensor (10) and an accelerometer (12) and a communication modem (11).

## Description

### Technical Field

The invention relates to the monitoring of beverage barrels, monitoring of relevant operating variables and logistics management.

### Background Art

Currently, technologies based on barcodes or passive RFID chips are mainly used for barrel logistics management.

Barcode technology is susceptible to operator error and fails to provide additional information besides logistical information. In addition, it requires a considerable investment in infrastructure in the form of handheld RFID scanners and/or RFID gateways.

RFID code technology is mostly (in the case of handheld scanners) prone to operator error.

Even with the use of automatic scanning gates, RFID technology imposes limitations, including due to low range and signal attenuation when traveling through the environment.

The limitations of signal attenuation will then be particularly apparent if the barrels are stacked on top of each other.

In the case of barcode technology, the indisputable advantage of low initial investment cost is offset by operational requirements, operator error sensitivity, and other drawbacks.

Some existing solutions rely on mobile operator networks to send data. However, barrels are often located in locations with weak operator signal (such as basements).

Solutions in which the equipment attached to each barrel communicates with the operator's network additionally entails additional costs in the form of connectivity charges and also the cost of manufacturing such equipment is high. Another problem is the lower battery life, which entails additional costs related to regular maintenance.

### Summary of the Invention

These deficiencies are eliminated by the presented system according to the present invention, which allows monitoring of the operational variables of the barrels, such as their temperature, the impacts to which the barrel was subjected, the tilt of the barrel or the connection status of the keg coupler.

In addition, the system allows you to locate barrels as it contains at least one location chip located on the barrel.

The system also integrates warnings about the upcoming expiration date, can evaluate the condition of the beverage in the barrel and check the correct sanitization of the beverage barrels.

The system uses an economical combination of gateways with connectivity provided by mobile operators and location chips that communicate with these gateways.

Some types of gateways can be placed in establishments in the form of fixed installation. With such gateways, it is technically easier to ensure good signal quality of the operator and also consumption is not a decisive criterion, which are significant advantages over systems where each barrel communicates with the operator's network.

The following terms control system - frontend, parent system - backend are used in the standard nomenclature of the software architecture. The term backend refers to a part of the system that the user does not directly control, but nevertheless provides the user with a service. The term frontend provides the user with a user interface. From a similar category is the term gateway, which represents a network node.

The system consists of a parent system technology - backend, control system technology - frontend, at least one mobile gateway and/or at least one static gateway, at least one active and/or at least one passive beacon of the keg coupler and at least one location chip coupled to the active and/or passive beacon.

The location chip further comprises a main processor, a memory unit and/or a thermometer and/or a keg coupler detector and/or an signalling device and/or an accelerometer and/or a tamper detector and/or a battery and/or a communication modem.

The battery powers all other named parts of the location chip.

The main processor collects data measured by the accelerometer and thermometer, detects the condition of the tamper detector and uses the keg coupler detector to detect the presence of the keg coupler.

The lever of the keg coupler can be preferably provided with a marker.

Based on the data stored in the memory unit and collected data, it can then recognize different types of events.

Event information is stored back in the memory unit by the main processor. Because only information about recognized events is stored in the memory unit, not raw data, the capacity of the memory unit is considerably more efficiently used.

If the location chip is located at a distance from the gateway, allowing communication with it, the gateway receives current information about the measured values. The gateway can also collect information about detected events from location chips within range.

All the detected information is then sent by the gateway to the parent system - backend.

The gateway can also communicate with the location chip to change its operational settings (for example, setting thresholds for detecting temperature overshoot events).

The parent system - backend can perform additional analytics over the information obtained. The analytical results and raw data are stored for later display by the user via the control system - frontend.

This change can be advantageously controlled by the user through the control system - frontend.

The parent system - backend can have information about the distribution of individual gateways to the respective establishments and other objects. When communicating with the parent system - backend, the gateway can advantageously provide information about its identity. The location chip can then provide information about its own identity to the gateway (and through it the parent system - backend). By combining information about the location of the gateway, and about the list of location chips in the communication range of the respective gateway, the parent system - backend is then able to locate barrels within different establishments and share the information with users through the control system - frontend.

### Brief Description of the Drawings

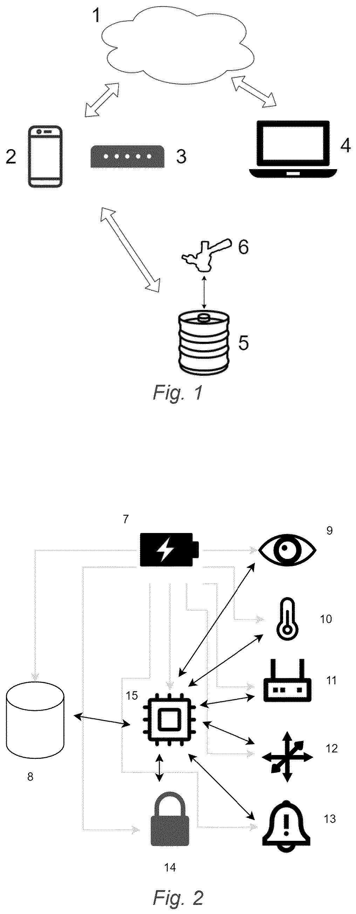

Figure 1: system architecture overview
Figure 2: general block diagram of the location chip

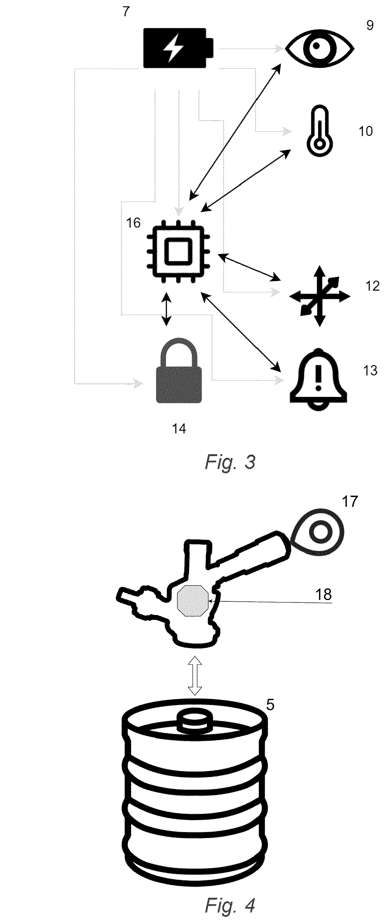

Figure 3: block diagram of a specific location chip implementation
Figure 4: Active beacon of the keg coupler and its interaction with the rest of the system

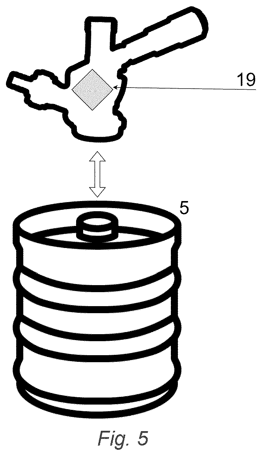

Figure 5: Active beacon of the keg coupler and its interaction with the rest of the system

### Description of the Embodiments

In one particularly advantageous embodiment, Bluetooth Low Energy (BLE) technology is used for communication between location chips 5 and gateways 2, 3. This technology allows to minimize the consumption of the location chip 5.

In this embodiment, the sensor 14 is handled in the form of a magnetic sensor; it measures the magnetic field of a small magnet stuck to the barrel. In the case of detachment of the location chip 5 from the barrel, the magnetic field changes and the event is recorded.

In this embodiment, the location chip 5 contains a system 16 on chip integrating the main processor 15 modem 11 and memory unit 8, which further reduces the cost of manufacturing the device.

Furthermore, the location chip 5 uses a high-precision digital thermometer 10 and a precise digital accelerometer 12, and these sensors communicate with the main processor 15 which is part of the system 16 on the chip, via an I²C bus interface.

Location chip 5 communicates with detector 9 of keg coupler 6 by means of a two-way infrared communication channel with active beacon 18 of keg coupler 6, and further detects passive beacon 19 of keg coupler 6.

Another feature of the aforementioned implementation of the location chip is the fact that its signalling device 13 is of optical-acoustic type and thus consists of a loud siren and a light-emitting diode with adjustable color.

In the concrete implementation, the battery 7 of the lithium primary type with low self-discharge and long service life is used.

Gateways 2, 3 in this implementation are static gateway 3 and mobile gateway 2, where the main unit described in Utility Model No. 37258 is used as static gateway 3 and a classic smartphone with a special application can be used as mobile gateway 2.

In this embodiment, the active beacon 18 of the keg coupler 6 includes a detector 9 of the coupler lever position operating on the hall probe principle and the marker 17 of the lever is formed by a small magnet.

Overview of the function of the whole system and its use

The location chips 5 are mechanically fixed on individual barrels. The main processor 15 communicates with the thermometer 10, the accelerometer 12, the detector 9 of the keg coupler 6 and the tamper sensor 14. Based on the settings stored in the memory unit 8 and the measured variables, various events are recognized by the main processor 15:
1) exceeding temperature thresholds
   The main processor 15 detects a temperature outside one of the set thresholds and creates an event record based on this and stores it in the memory unit 8.
2) tampering
   The main processor 15 detects, based on the data provided by the sensor 14, that the location chip 5 has been forcibly torn from the barrel and creates an event record based on this and stores it in the storage unit 8.
3) barrel rotation
   Based on the data provided by the accelerometer, the main processor 15 detects that the barrel has been turned upside down and creates an event record based on this and stores it in the memory unit 8.
4) barrel impact/fall
   Using the accelerometer data, the main processor 15 detects the undue impact of the barrel and creates an event record based on it and stores it.
5) connecting and disconnecting the keg coupler
   Based on the data from detector 9 of the keg coupler 6, the main processor 15 recognizes that the keg coupler 6 has been pushed onto the barrel. In the case of the use of the active beacon 18 of the keg coupler 6, the moment of insertion of the keg coupler 6 and the actual coupling/decoupling are distinguished from each other.

It is clear to the expert in the field that it would be possible to detect possibly other types of events by analyzing the data measured by sensors 9, 10, 12 13, 14.

It is also clear to such an expert that it would be possible to extend the location chip 5 by adding additional sensors, such as a humidity sensor.

The location chip 5 can indicate any special conditions by means of the signalling device 13.

The signalling device 13 can also serve as an alarm warning in case of tampering.

The location chip 5 detects the presence of the keg coupler 6 on the barrel using keg coupler detector 9, if the head has a passive beacon 19. If it has an active beacon 18, it will identify the specific keg coupler 6 and distinguish the position of the keg coupler lever, i.e. whether the barrel is coupled or not.

The passive beacon 19 is an object attached to the keg coupler 6, which reflects the signal sent back to it by the location chip 5 by means of a reflecting target, thereby detecting the keg coupler 6.

Active beacon 18 is a device attached to the keg coupler 6 that periodically transmits a signal. Encoded in this signal is information identifying the specific keg coupler 6 and the position of the lever.

The position of the lever is detected by the lever position detector in cooperation with the marker 17 of the lever.

Static gateway 3 means a gateway located in an establishment or other location.

Mobile gateway 2 means a portable gateway, transmitted by personnel handling barrels.

Mobile gateway 2 may, in particularly advantageous versions, have a location device, for example in the form of a GPS locator, and may transmit information about its current location to the parent system 1 - backend.

Mobile and static gateways 2, 3 mediate communication between location chips 5 and the parent system 1 - backend. They can read real-time data wirelessly from sensors 9, 10, 12, 13, 14 of individual location chips 5, read the event list stored in chip memory unit 8, change the operating settings of location chip 5 and assist in determining the current position of individual location chips 5.

Parent system 1 - backend manages information of logistical and operational nature, i.e.:
1) maintains information on individual establishments, which includes, but is not limited to, names, opening hours and map coordinates
2) maintains information on the location of individual gateways 2, 3 to the establishments
3) maintains information on filling of individual barrels, cleaning of beverage barrels and expiration dates

Parent system 1 - backend communicates with the control system 4 - frontend via REST API technology.

Parent system 1 - backend stores data sent by gateways 2, 3, optionally performs additional analysis and detects other events based on data received from individual gateways 2,3 and logistical operational records.

Events detectable by the parent system 1 - backend include:
1) barrel leaving the establishment
2) delivery of the barrel to the establishment
3) emptying the barrel
4) filling the barrel
5) cleaning the barrel
6) approaching expiration date
7) exceeding the expiration date
8) intolerable deterioration of the quality of the drink (for example due to exceeding temperature thresholds)

However, it is clear to an expert in the field that in principle other events could be detected by analyzing the available data.

Parent system 1 - backend can locate individual barrels based on information about the location of static gateways 3 in the establishments and the list of location chips 5 located within the communication range of individual gateways.

It can also use location information obtained by mobile gateways 2 to locate it.

Control system 4 - frontend allows the user to view information stored in the parent system 1 - backend, analyses performed by the parent system 1 - backend and location chips 5 and change the settings of location chips 5.

Operators move barrels between locations, i.e. they take empty barrels from restaurants for cleaning and refilling, and vice versa they bring full barrels to restaurants.

At the time of picking up the barrel by the operator, his mobile phone detects the barrel and the system records that the barrel was in the vicinity of the operator. The mobile phone serves as a mobile gateway 2, i.e. data from sensors of individual barrels are sent through it throughout the transport. These are stored in a database.

At the same time, the location AGPS system of the mobile phone is used to advantage and the time course of the change of location of individual barrels is recorded in the parent system 1 - backend.

Once the barrels arrive at a location (for example, at a given restaurant), they begin communicating with the static gateway 3 located at that location.

Furthermore, data collection from barrels can take place.

Based on the location information from the AGPS system and the fact that the barrels were recorded by the static gateway 3 at the given location, the parent system 1 - backend detects information about the current position of the barrels. On this basis, alerts can be sent to users, or information about barrel movements can be traced back using the control system 4 - frontend.

In case of problems during the transport, such as temperature overruns, due to the fact that all variables have been recorded, the parent system 1 - backend can detect the problem and, for example, send notifications to users based on it.

For example, if there is an error by the operator and the operator does not have the mobile phone switched on during the barrel transfer, only the recording of variables during the barrel transfer will fail. Detection of a change in location is successful based on the fact that barrels are spotted by another gateway.

Also, information about exceeding temperature thresholds or excessive shocks is not lost in case of operator error. This information is recorded by the location chips in the chip memory and is later sent through the gateway. Therefore, a possible operator error may at worst cause missing data on operating variables from some time window. However, critical deviations of these operating variables within that window are recorded.

Temperature and other operating variables are also monitored within the restaurant. Possible threshold crossings and other anomalies are reported to users.

At the time of filling the barrel, it is possible to store information about what drink was filled into the barrel in the parent system 1 - backend. The parent system 1 - backend can then inform the user via the control system 4 - frontend about what drinks are missing, for example, in a restaurant and therefore need to be ordered.

It is also possible to recognize the moment of impact and bouncing of the barrel. This will, for example, allow the use of additional technologies such as flow meters to calculate the consumption of individual drinks directly.

If the system detects that a drink inside the barrel is, for example, spoiled or expired, it can notify the user of this fact through sent notifications. It is also possible to indicate such a condition by optical signalling.

A serious problem, such as the fact that a cask of rotten beverage has been tapped, can be indicated by a combination of audible and optical signalling.

### Industrial Applicability

The system according to the present invention will find application especially in monitoring of beverage barrels, monitoring of relevant operating variables and logistics management.

### Reference Signs List

1 - parent system - backend
2 - mobile gateway
3 - static gateway
4 - control system - frontend
5 - location chip
6 - keg coupler
7 - battery
8 - memory unit
9 - keg coupler detector
10 - thermometer
11 - modem
12 - accelerometer
13 - signalling device
14 - tamper sensor
15 - main processor
16 - system on chip integrating main processor, modem and memory unit
17 - keg coupler lever marker
18 - active beacon of the keg coupler
19 - passive beacon of the keg coupler

## Claims

1. A system for monitoring the location and operating variables of beverage barrels comprising at least one barrel-mounted location chip (5) which is interconnectable via a mobile gateway (2) and/or a static gateway (3) with a parent system (1) - backend, **characterized in that** the parent system (1) - backend is connected to a control system (4) - frontend, and furthermore, the system comprises at least one active beacon (18) and/or passive beacon (19) of a keg coupler (6) interconnectable with the location chip (5), the location chip (5) comprising a main processor (15) interconnectable with a temperature sensor (10), an accelerometer (12) and a communication modem (11).

2. The system according to claim 1, **characterized in that** the main processor (15) is further interconnected with a detector (9) of the keg coupler (6).

3. The system according to claim 1 or 2, **characterized in that** the lever of the keg coupler (6) is provided with a marker (17).

4. The system according to any one of claims 1 to 3, **characterized in that** the main processor (15) is provided with a memory unit (8).

5. The system according to any one of claims 1 to 4, **characterized in that** the main processor (15) is connectable to a signaling device (13) and a tamper sensor (14).

6. The system according to any one of claims 1 to 5, **characterized in that** the main processor (15), the communication modem (11) and the memory unit (8) are integrated on a single chip (16).

7. The system according to any one of claims 1 to 5, **characterized in that** the main processor (15) is provided with a battery (7).
